# EUROPEAN PATENT APPLICATION

(11) **EP 0 829 512 A1**
(43) Date of publication of application: **18.03.1998**
(21) Application number: 97115701.1
(22) Date of filing: 10.09.1997
(51) Int. Cl.: C08L 15/00, C09D 115/00

(54) **Hydrogenated nitrile rubber latex composition**

(30) Priority: 16.09.1996 US 714707
(71) Applicant: THE GOODYEAR TIRE & RUBBER COMPANY, Akron, Ohio 44316-0001 (US)
(72) Inventor: Roberts, Robert Fleming, Uniontown, Ohio 44685 (US); Parker, Dane Kenton, Massillon, Ohio 44646 (US)
(74) Representative: Leitz, Paul

(57) **Abstract**

The subject invention discloses a hydrogenated nitrile rubber latex composition which can be used in making films, coatings, adhesives and binders, having enhanced tensile properties, said hydrogenated nitrile rubber latex composition being comprised of a blend of (a) hydrogenated nitrile rubber latex, wherein the hydrogenated nitrile rubber in the latex is a highly crosslinked hydrogenated nitrile rubber, and (b) from about 5 phr to about 40 phr of a chlorinated paraffin wax. The present invention further discloses a hydrogenated nitrile rubber composition having enhanced tensile strength which is comprised of (a) a highly crosslinked hydrogenated nitrile rubber and (b) from about 5 phr to about 40 phr of a chlorinated paraffin wax.

## Description

### Background of the Invention

Hydrogenated nitrile rubber has the advantage of being resistant to oxidative degradation at high temperatures, as well as being resistant to corrosive environments, such as acidic conditions. Hydrogenated nitrile rubber has accordingly been found to be useful in manufacturing power transmission belts, seals, gaskets and hoses for increasingly smaller and hotter-running automobile engines.

One process for the production of hydrogenated nitrile rubber involves hydrogenating the rubber while it is in latex form. This process is described in United States Patent 4,452,950 and results in the production of hydrogenated nitrile rubber latex. Another process for the preparation of hydrogenated nitrile rubber latex is described in United States Patent 5,442,009. The techniques disclosed in these patents utilize hydrazine and United States Patent 5,302,696 discloses a technique for minimizing the level of residual-free hydrazine in hydrogenated rubber latices.

Films, coatings, adhesives and binders made from hydrogenated nitrile rubber latex offer advantages in numerous applications, such as coatings for metallic automotive gaskets. However, the tensile properties of films, coatings and other articles having binders which are made with hydrogenated nitrile rubber latex too low for some applications. There is accordingly a need to increase the tensile properties of articles made utilizing hydrogenated nitrile rubber latex.

### Summary of the Invention

It has been unexpectedly found that the tensile properties of articles made with hydrogenated nitrile rubber latices can be dramatically improved by incorporating a chlorinated paraffin wax into the latex. This technique can accordingly be used to enhance the tensile characteristics of films and coatings made with such latices. For instance, the latices of this invention can be used in coating metal gaskets or in coating fabrics. The coated gasket or fabric will accordingly exhibit enhanced physical properties. The latices of this invention can also be advantageously used in manufacturing gloves and other articles.

The subject invention more specifically discloses a hydrogenated nitrile rubber composition having enhanced tensile strength which is comprised of (a) a highly crosslinked hydrogenated nitrile rubber and (b) from about 5 phr to about 40 phr of a chlorinated paraffin wax.

The subject invention further discloses a hydrogenated nitrile rubber latex composition which can be used in making films, coatings, adhesives and binders having enhanced tensile properties, said hydrogenated nitrile rubber latex composition being comprised of a blend of (a) hydrogenated nitrile rubber latex, wherein the hydrogenated nitrile rubber in the latex is a highly crosslinked hydrogenated nitrile rubber, and (b) from about 5 phr to about 40 phr of a chlorinated paraffin wax.

### Detailed Description of the Invention

The hydrogenated nitrile rubber latex compositions of this invention are easily prepared by simply mixing an emulsion of a chlorinated paraffin wax into a hydrogenated nitrile rubber latex. The chlorinated paraffin wax emulsion can be blended into the hydrogenated nitrile rubber latex using any mixing procedure which will thoroughly and homogeneously disperse the chlorinated paraffin wax emulsion into the hydrogenated nitrile rubber latex. This mixing procedure can be carried out over a wide temperature range but will typically be done at a temperature which is within the range of about 5° to about 80°C. The chlorinated paraffin wax emulsion will more typically be mixed into the hydrogenated nitrile rubber latex at a temperature which is within the range of about 10°C to about 40°C. In most cases, as a matter of convenience, this mixing will be done at room temperature (about 20°C to about 25°C).

Normally, from about 5 phr (parts per hundred parts by weight of rubber) to about 40 phr of the chlorinated paraffin wax will be added to the latex (based on dry weights of wax and rubber). It is generally preferred for about 10 phr to about 30 phr of the chlorinated paraffin wax to be added and it is most preferred for 15 phr to about 25 phr of the chlorinated paraffin wax to be added.

The chlorinated paraffin wax used will typically contain from about 10 weight percent to about 80 weight percent chlorine. It will preferably contain from about 40 weight percent to about 75 weight percent chloride and will most preferably contain from about 50 weight percent to about 70 weight percent chlorine. Chlorinated paraffin wax emulsions which are suitable for use in the practice of this invention are readily commercially available. For instance, Harwick Chemical sells Aquamix™ 108 chlorinated paraffin wax emulsion which is highly suitable for use in the practice of this invention. Such chlorinated paraffin wax emulsions typically have solids contents which are within the range of about 30 weight percent to about 60 weight percent. They more typically have solids contents which are within the range of about 45 weight percent to about 55 weight percent.

The hydrogenated nitrile rubber latices which are used in the practice of this invention are also readily commercially available. For instance, The Goodyear Tire & Rubber Company sells a number of hydrogenated nitrile rubber latices which can be used in the practice of this invention. Chemisat® LCH7302X hydrogenated nitrile rubber latex has a solids content of about 32 percent and contains a very highly crosslinked hydrogenated nitrile rubber. Chemisat® LCH7335X hydrogenated nitrile rubber latex has a solids content of about 41 percent and contains a hydrogenated nitrile rubber which has an antioxidant chemically bound thereto. Chemisat® LCH7505X hydrogenated nitrile rubber latex has a solids content of about 36 percent and contains a carboxylated hydrogenated nitrile rubber.

Hydrogenated nitrile rubber latices which are suitable for use in the practice of this invention can be made by the general procedure described in United States Patent 4,452,950, the teachings of which are incorporated herein by reference in the entirety. The hydrogenated nitrile rubber in the latex is highly crosslinked. In fact, the hydrogenated nitrile rubber is crosslinked to the degree where it is insoluble in chloroform. This is, of course, in contrast to uncrosslinked hydrogenated nitrile rubber which is highly soluble in chloroform.

After the hydrogenated nitrile rubber latex composition is prepared, it can be used in manufacturing a wide variety of articles. For example, it can be cast into films or it can be applied to a substrate as a coating. For instance, metal articles can be coated with the hydrogenated nitrile rubber by applying the latex to the article and allowing the latex to dry. After drying, the article is coated with the hydrogenated nitrile rubber. Such a technique can be used to coat a variety of articles, such as steel gaskets or fabrics. In many cases, it will be desirable to add a thickener to the hydrogenated nitrile rubber latex composition. Some representative examples of thickeners which can be used include polyacrylates, cellulosic thickeners and clay dispersions.

This invention is illustrated by the following examples which are merely for the purpose of illustration and are not to be regarded as limiting the scope of the invention or the manner in which it can be practiced. Unless specifically indicated otherwise, all parts and percentages are given by weight.

### Examples 1-7

In this series of experiments, films were made with the hydrogenated nitrile rubber latex composition of this invention and compared with films made with other latex compositions. In the procedure used, 20 phr of the plasticizers shown in Table I were mixed into Chemisat® LCH7335X hydrogenated nitrile rubber latex samples. The hydrogenated nitrile rubber in the Chemisat® LCH7335X latex contains a bound antioxidant. Then 200 ml of each of the latex samples were added to 500 ml beakers. Water was added to each of the latex samples to adjust the solids contents to 45 percent. The diluted latices were then strained through Canton flannel or 100 mesh screen into a second beaker to remove entrapped air. Marine-type agitation blades were used with care being taken not to entrap air. Then, Alcogum™ 6625 sodium polyacrylate thickener was added to each of the latex samples to adjust the Brookfield viscosity (No. 4 spindle at 60 rpm) of each of the latex samples to 3000 cps.

A glass plate was wiped with a moistened towel and then a piece of Mylar film was positioned on the glass plate with the edges of the Mylar film being taped down. The latex samples were then drawn down on the Mylar to form a film using a draw bar set to produce a 0.060 inch (1.52 mm) wet film. The film samples were air-dried overnight at room temperature. Then the film samples were further dried for 1.5 hours while still attached to the Mylar. Talc was then applied to the film samples which were subsequently removed from the Mylar. The film samples were then reversed to the other side and dried for an additional 1.5 hours at 180°F (82°C).

The film samples were tested to determine tensile characteristics. Table I shows the tensile strength, elongation and modulus at 200 percent elongation for each of the samples. Example 1 was carried out as a control and did not include a plasticizer. Examples 2-6 were carried out as comparative examples which utilized tricresyl phosphate (TCP), dioctyl adipate (DOA), dioctyl phthalate (DOP), thioester and a non-chlorinated wax as plasticizers at a level of 20 phr. All of the plasticizers were added in the form of emulsions. Example 7 was carried out utilizing the technique of this invention with Aquamix™ 108 chlorinated wax emulsion being used as the plasticizer. Aquamix™ 108 chlorinated paraffin wax emulsion is a product of Harwick Chemical Corporation and is an emulsion of chlorinated paraffin wax having a chlorine content of 70 weight percent.

**Table I**

| Example | Plasticizer | Tensile | Elongation | Modulus |
|---|---|---|---|---|
| 1 | none | 283 psi | 221% | 249 psi |
| 2 | TCP¹ | 166 psi | 169% | 76 psi |
| 3 | DOA² | 88 psi | 55% | - |
| 4 | DOP³ | 120 psi | 109% | - |
| 5 | thioester⁴ | 186 psi | 167% | - |
| 6 | wax⁵ | 404 psi | 247% | 295 psi |
| 7 | Cl wax⁶ | 910 psi | 315% | 263 psi |

| | | | | |
|---|---|---|---|---|
| ¹TCP stands for tricresyl phosphate. | | | | |
| ²DOA stands for dioctyl adipate. | | | | |
| ³DOP stands for dioctyl phthalate. | | | | |
| ⁴The thioester used was Wingstay® SN-1 thioester which is a product of The Goodyear Tire & Rubber Company. | | | | |
| ⁵The wax used was Michem Lube® 135 paraffin wax emulsion from Michelman Incorporated. | | | | |
| ⁶The chlorinated paraffin wax used in Example 7 was Aquamix™ 108 chlorinated wax emulsion from Harwick Chemical Corporation. | | | | |

As can be seen in Table I, the film made with the chlorinated wax had a much higher tensile strength than any of the films made with other plasticizers. The film made with the chlorinated wax also exhibited the highest elongation and modulus. Thus, the chlorinated wax greatly improved the tensile characteristics of the hydrogenated nitrile rubber composition.

### Examples 8-14

In this series of experiments, films were made using the same procedure as was used in Examples 1-7, except that the films were aged for 65 hours at 260°F (127°C) before being tested to determine tensile characteristics. As in Examples 1-7 all of the plasticizers were added as emulsions at a level of 20 phr. Table II shows the tensile strength, elongation and modulus at 200 percent elongation for each of the samples. Example 8 was carried out as a control and did not include a plasticizer. Examples 9-13 were carried out as comparative examples which utilized tricresyl phosphate (TCP), dioctyl adipate (DOA), dioctyl phthalate (DOP), thioester and a non-chlorinated wax as plasticizers. The film made in Example 14 includes a chlorinated paraffin wax.

**Table II**

| Ex. | Plasticizer | Tensile | Elongation | Modulus |
|---|---|---|---|---|
| 8 | none | 493 psi | 330% | 199 psi |
| 9 | TCP¹ | 330 psi | 328% | 128 psi |
| 10 | DOA² | 280 psi | 286% | 177 psi |
| 11 | DOP³ | 296 psi | 306% | 162 psi |
| 12 | thioester⁴ | 746 psi | 370% | 207 psi |
| 13 | wax⁵ | 1479 psi | 417% | 379 psi |
| 14 | Cl wax⁶ | 1550 psi | 207% | 1408 psi |

| | | | | |
|---|---|---|---|---|
| ¹TCP stands for tricresyl phosphate. | | | | |
| ²DOA stands for dioctyl adipate. | | | | |
| ³DOP stands for dioctyl phthalate. | | | | |
| ⁴The thioester used was Wingstay® SN-1 thioester which is a product of The Goodyear Tire & Rubber Company. | | | | |
| ⁵The wax used was Michem Lube® 135 paraffin wax emulsion from Michelman Incorporated. | | | | |
| ⁶The chlorinated paraffin wax used in Example 7 was Aquamix™ 108 chlorinated wax emulsion from Harwick Chemical Corporation. | | | | |

Example 14 was carried out utilizing the technique of this invention with a chlorinated wax being used as the plasticizer. As can be seen in Table II, the film made with the chlorinated wax had a much higher modulus after being aged at 260°F (127°C) than any of the films made with other plasticizers. The film made with the chlorinated wax also exhibited the highest tensile strength after being aged. Thus, the chlorinated wax greatly improved the tensile characteristics of the hydrogenated nitrile rubber composition.

### Examples 15-19

In this series of experiments, films were made using the same procedure as was used in Examples 1-7 except that Chemisat® LCH7302X latex was substituted for the Chemisat® LCH7335X latex and that the level of hydrogenated nitrile rubber blended into the film samples was varied. Chemisat® LCH7302X latex is very highly crosslinked and has a solids content of 32 percent.

Table III shows the tensile strength and modulus at 200 percent elongation for each of the samples. Example 15 was carried out as a control and did not include a plasticizer. Example 16 was carried out as comparative example which utilized a non-chlorinated wax as the plasticizer. The films made in Examples 17-19 include varying amounts of Aquamix™ 108 chlorinated paraffin wax.

**Table III**

| Example | Plasticizer | Tensile | Modulus |
|---|---|---|---|
| 15 | none | 349 psi | 255 psi |
| 16 | wax¹, 20 phr | 297 psi | 196 psi |
| 17 | Cl wax, 30 phr | 1428 psi | 268 psi |
| 18 | Cl wax, 20 phr | 1339 psi | 287 psi |
| 19 | Cl wax, 10 phr | 639 psi | 289 psi |

| | | | |
|---|---|---|---|
| ¹The wax used was Michem Lube® 135 paraffin wax emulsion from Michelman Incorporated. | | | |

### Examples 20-24

In this series of experiments, films were made using the same procedure as was used in Examples 15-19 except that the films were aged for 65 hours at 260°F (127°C) before being tested to determine tensile characteristics. Table IV shows the tensile strength and modulus at 200 percent elongation for each of the samples.

Example 20 was carried out as a control and did not include a plasticizer. Example 21 was carried out as comparative example which utilized a non-chlorinated wax as the plasticizer. The films made in Examples 22-24 include varying amounts of Aquamix™ 108 chlorinated paraffin wax.

**Table IV**

| Example | Plasticizer | Tensile | Modulus |
|---|---|---|---|
| 20 | none | 1585 psi | 246 psi |
| 21 | wax¹, 20 phr | 1054 psi | 329 psi |
| 22 | Cl wax, 30 phr | 2829 psi | 1433 psi |
| 23 | Cl wax, 20 phr | 3312 psi | 1328 psi |
| 24 | Cl wax, 10 phr | 2159 psi | 856 psi |

| | | | |
|---|---|---|---|
| ¹The wax used was Michem Lube® 135 paraffin wax emulsion from Michelman Incorporated. | | | |

While certain representative embodiments and details have been shown for the purpose of illustrating the subject invention, it will be apparent to those skilled in this art that various changes and modifications can be made therein without departing from the scope of the subject invention.

## Claims

1. A hydrogenated nitrile rubber composition having enhanced tensile strength which is characterized by being comprised of (a) a highly crosslinked hydrogenated nitrile rubber and (b) from 5 phr to 40 phr of a chlorinated paraffin wax.

2. A hydrogenated nitrile rubber latex composition which can be used in making films, coatings, adhesives and binders having enhanced tensile properties, said hydrogenated nitrile rubber latex composition being characterized by being comprised of a blend of (a) hydrogenated nitrile rubber latex, wherein the hydrogenated nitrile rubber in the latex is a highly crosslinked hydrogenated nitrile rubber, and (b) from 5 phr to 40 phr of a chlorinated paraffin wax.

3. A hydrogenated nitrile rubber composition as specified in claim 1 characterized in that the chlorinated paraffin wax contains from 10 weight percent to 80 weight percent chlorine; and characterized in that said hydrogenated nitrile rubber composition contains from 10 phr to 30 phr of the chlorinated paraffin wax.

4. A hydrogenated nitrile rubber composition as specified in claim 1 or 3 characterized in that the chlorinated paraffin wax contains from 40 weight percent to 75 weight percent chlorine; and characterized in that said hydrogenated nitrile rubber composition contains from 15 phr to 25 phr of the chlorinated paraffin wax.

5. A hydrogenated nitrile rubber composition as specified in claim 1, 3 or 4 characterized in that the chlorinated paraffin wax contains from 50 weight percent to 70 weight percent chlorine.

6. A hydrogenated nitrile rubber latex composition as specified in claim 2 characterized in that the chlorinated paraffin wax contains from 10 weight percent to 80 weight percent chlorine; and characterized in that said hydrogenated nitrile rubber latex contains from 10 phr to 30 phr of the chlorinated paraffin wax.

7. A hydrogenated nitrile rubber latex composition as specified in claim 2 or 6 characterized in that said latex has a solids content which is within the range of 30 weight percent of 60 percent; characterized in that the chlorinated paraffin wax contains from 40 weight percent to 75 weight percent chlorine; and characterized in that said hydrogenated nitrile rubber latex contains from 15 phr to 25 phr of the chlorinated paraffin wax.

8. A hydrogenated nitrile rubber latex composition as specified in claim 2, 6 or 7 characterized in that said latex has a solids content which is within the range of 45 weight percent of 55 percent.

9. A hydrogenated nitrile rubber latex composition as specified in claim 2, 6, 7 or 8 characterized in that said latex is further comprised of a thickener.

10. A hydrogenated nitrile rubber latex composition as specified in claim 9 characterized in that said thickener is selected from the group consisting of polyacrylate thickeners, clay dispersions and cellulosic thickeners.
